# EUROPÄISCHE PATENTSCHRIFT

(11) **EP 2 557 343 B1**
(45) Veröffentlichungstag und Bekanntmachung des Hinweises auf die Patenterteilung: **14.09.2016**
(21) Anmeldenummer: 12173605.2
(22) Anmeldetag: 26.06.2012
(51) Int. Cl.: F16K 31/06, F16K 27/02

(54) **Elektromagnetventil**
Electromagnetic valve
Soupape électromagnétique

(30) Priorität: 09.08.2011 DE 102011052516
(43) Veröffentlichungstag der Anmeldung: 13.02.2013
(73) Patentinhaber: Pierburg GmbH, 41460 Neuss (DE)
(72) Erfinder: Buse, Werner, 41564 Kaarst (DE); Tielmann, Norbert, 42349 Wuppertal (DE); Fernandes, Alvito, 51377 Leverkusen (DE); Schnelker, Franz-Josef, 41470 Neuss (DE)
(74) Vertreter: Patentanwälte ter Smitten Eberlein Rütten Partnerschaftsgesellschaft

(56) Entgegenhaltungen:
- DE-A1- 2 747 430
- DE-A1-102008 019 209
- GB-A- 1 390 334
- US-A- 4 326 696
- US-A- 4 922 965
- US-A- 5 925 826
- US-A- 5 967 487
- US-A1- 2004 195 537
- US-A1- 2006 097 830

## Beschreibung

Die Erfindung betrifft ein Elektromagnetventil mit einem elektromagnetischen Kreis bestehend aus einer Spule, einem Kern, einem Anker, einem Joch und einem Rückschlussblech, einem Anschlussstecker, einem Ventilschließglied, welches mit dem Anker verbunden ist, einem Spulenträger, einem Außengehäuse und einem ersten Anschlussgehäuse, wobei an der Verbindung zwischen dem ersten Anschlussgehäuse und dem Außengehäuse Mittel zur Abdichtung angeordnet sind, wobei an der Verbindung zwischen dem ersten Anschlussgehäuse aus Kunststoff und dem Spulenträger aus Kunststoff Mittel zur Abdichtung angeordnet sind.

Derartige Elektromagnetventile werden in einer Vielzahl von Anwendungen verwendet. So sind beispielsweise aus dem Automobilbereich verschiedene pneumatische und hydraulische Anwendungen als elektrische Umschaltventile, elektropneumatische Wandler, Öldruckregelventile oder Brennstoffeinspritzventile bekannt. Je nach Einbauort des Ventils können gerade bei mobilen Anwendungen Witterungseinflüsse wirksam werden. Aus diesem Grund entsteht die Forderung flüssigkeitsdichte Ventile zur Verfügung zu stellen.

So ist aus der EP 0 536 774 A1 ein Brennstoffmengenregelventil bekannt, welches an seinem ersten axialen Ende einen Einlass und an seinem entgegengesetzten axialen Ende einen Auslass aufweist. Ein Außengehäuse, welches die Spule umschließt, ist durch Laserschweißen mit einem ferromagnetischen Element verbunden, in welchem die als Auslass dienende Einspritzöffnung ausgebildet ist. Zusätzlich ist im Innern des Elektromagnetventils ein Dichtring zwischen dem Kern und dem ferromagnetischen Element angeordnet, wodurch ein Eindringen von Flüssigkeit aus dem Innern des Ventils zur Spule vermieden werden soll.

Bei diesem Ventil besteht jedoch der Nachteil, dass zwar eine Abdichtung zur Spule erreicht wird, jedoch das Ventil relativ viel Bauraum benötigt, da der Kern sich zur Abdichtung über die gesamte Länge der Spule und darüber hinaus erstreckt. Aus diesem Grund muss auch sowohl das Anschlussgehäuse als auch das Außengehäuse aus Metall hergestellt werden, was die Herstellung deutlich erschwert und zu erhöhten Kosten führt.

Aus der US 5,925,826 ist ein axial durchströmbares Elektromagnetventil bekannt. Zwischen dem ersten Anschlussgehäuse, dem Spulenträger und dem Außengehäuse ist ein radial und axial wirkender Dichtring angeordnet. Ein zweites Anschlussgehäuse wird nicht offenbart. Entsprechend wird auch kein Abdichtmittel zwischen dem Außengehäuse und dem Kern offenbart. Stattdessen dient ein Abschnitt des Kerns als Anschlussstutzen, der somit zusätzlich mechanisch bearbeitet werden muss. Die Montage des Dichtrings ist sehr schwierig, wenn dieser sowohl axial als auch radial abdichten soll.

In der US 5,967,487 wird ein Elektromagnetventil offenbart, an deren Anschlussgehäuse sowohl der Einlass- als auch der Auslassstutzen ausgebildet sind. Zwischen dem Anschlussgehäuse und dem Spulenträger ist der äußere Rand einer Membran eingeklemmt, welche als Abdichtung wirkt. Eine Abdichtung zwischen dem Anschlussgehäuse und dem Außengehäuse ist nicht vorgesehen, so dass über diesen Spalt Spritzwasser eindringen kann.

Die DE 27 47 430 A1 offenbart ein axial durchströmbares Magnetventil mit zwei Ventilsitzen. Auch hier ist zwischen dem ersten Anschlussgehäuse, dem Spulenträger und dem Außengehäuse ein Dichtring angeordnet, der sowohl axial als auch radial abdichten muss. Ein zweites Anschlussgehäuse wird nicht offenbart.

Es stellt sich daher die Aufgabe, ein Elektromagnetventil zu schaffen, welches flüssigkeitsdicht ist und somit im Fahrzeug den Witterungseinflüssen ausgesetzt werden kann und gleichzeitig geringen Bauraum benötigt und kostengünstig herzustellen ist.

Diese Aufgabe wird durch ein Elektromagnetventil mit den Merkmalen des Anspruchs 1 gelöst.

Dadurch, dass der Spulenträger einen zylindrischen Verlängerungsabschnitt aufweist, der in das erste Anschlussgehäuse ragt und eine erste Laserschweißnaht an einem zur Spule weisenden Ende des ersten Anschlussgehäuses ausgebildet ist, über welche das Außengehäuse, welches in diesem Bereich den zylindrischen Verlängerungsabschnitts des Spulenträgers umgibt, mit dem das Außengehäuse umgebenden Anschlussgehäuse verbunden ist, kann der Kern kürzer ausgeführt werden, so dass der Anker innerhalb der Spule geführt ist. Entsprechend können die Gehäuseteile als Kunststoffspritzteile hergestellt werden, so dass das Ventil kostengünstig herstellbar ist. Es wird eine besonders einfache Abdichtung zwischen dem Anschlussgehäuse und dem Spulenträger über einen O-Ring geschaffen werden kann. Die Laserschweißnaht dient zur Abdichtung gegen äußere Witterungseinflüsse und wirkt mit den zusätzlichen Mitteln zur Abdichtung zwischen dem ersten Anschlussgehäuse aus Kunststoff und dem Spulenträger aus Kunststoff zusammen, wodurch sowohl innerhalb als auch außerhalb des Gehäuses Leckageströmungen vermieden werden.

Vorzugsweise weist das Elektromagnetventil an seiner zum Anschlussgehäuse gegenüberliegenden Seite ein zweites Anschlussgehäuse mit einem Fluidauslass auf, der fluidisch mit einem Fluldeinlass am ersten Anschlussgehäuse verbindbar ist. So wird ein durch den Kern durchströmbares dichtes Elektromagnetventil geschaffen. In einer hierzu weiterführenden Ausführung sind an der Verbindung zwischen dem Kern und dem zweiten Anschlussgehäuse Mittel zur Abdichtung angeordnet. So wird auch eine Dichtigkeit zum Spulengehäuse bezüglich des über das Ventil abzusperrenden Fluids im Bereich des zweiten Anschlussgehäuses sichergestellt.

In einer hierzu wiederum vorteilhaften Ausgestaltung sind auch an der Verbindung zwischen dem Außengehäuse und dem zweiten Anschlussgehäuse Mittel zur Abdichtung angeordnet, wodurch auch ein Eindringen von Feuchtigkeit von außen zuverlässig vermieden wird.

Vorzugsweise ist am ersten Anschlussgehäuse ein Fluldauslass mit einem ersten Ventilsitz ausgebildet und im Kern ist ein durch den Anker ragendes Rohr befestigt ist, welches den zweiten Ventilsitz für das Ventilschließglied bildet. Hierdurch wird ein 3/2-Wegeventil geschaffen welches als Umschaltventil genutzt werden kann.

In einer hierzu alternativen Ausführung ist ein erster Ventilsitz am Spulenträger ausgebildet, in dem eine Öffnung zur Verbindung mit dem Einlass und eine Öffnung zur Verbindung mit dem ersten Auslass des ersten Anschlussgehäuses ausgebildet sind. Dies vereinfacht die Montage des Ventils.

In einer weiterführenden Ausführungsform ragt das zum ersten Ventilsitz gegenüberliegende Ende des Spulenträgers in den Auslass des ersten Anschlussgehäuses, wobei zwischen dem Ende des Spulenträgers und dem Auslass des Anschlussgehäuses Mittel zur Abdichtung angeordnet sind. So wird eine Kurzschlussströmung zwischen dem Einlassstutzen und dem Auslassstutzen des ersten Anschlussgehäuses vermieden.

In einer besonderen Ausführung sind die Mittel zur Abdichtung durch eine Laserschweißnaht gebildet. Dies ist besonders im Bereich der Verbindungen der beiden Gehäuseteile sinnvoll, also bei zwei Kunststoffteilen, welche sonst lediglich durch den Spritzgießprozess unzureichend und nicht flüssigkeitsdicht verbunden sind. Diese Laserschweißnähte dienen entsprechend zur Abdichtung gegen äußere Witterungseinflüsse. Entsprechend sind an den Verbindungen zum Außengehäuse die Laserschweißnähte ausgebildet.

In einer weiteren Ausführung sind die Mittel zur Abdichtung durch einen Dichtring gebildet. Dieser wird vor allem in Bereichen benutzt, in denen zwei verschiedene Materialien gegeneinander abgedichtet werden müssen, also insbesondere im inneren Bereich zum Schutz vor einem Eindringen des gesteuerten Mediums in Richtung der Spule. Entsprechend ist an der Verbindung zwischen dem Kern und dem Spulenträger ein Dichtring angeordnet.

Um auch im Bereich des Steckers ein Eindringen von Wasser zu verhindern, sind die Spule und die Kontaktfahnen des Steckers wasserdicht umspritzt.

Es wird somit ein wasserdichtes Elektromagnetventil geschaffen, welches eine geringe axiale Baulänge aufweist und kostengünstig mit Kunststoffgehäusateilen hergestellt werden kann.

Zwei Ausführungsbeispiele eines erfindungsgemäßen Elektromagnetventils in einer Ausführung als elektrisches Umschaltventil sind in den Figuren dargestellt und werden nachfolgend beschrieben.

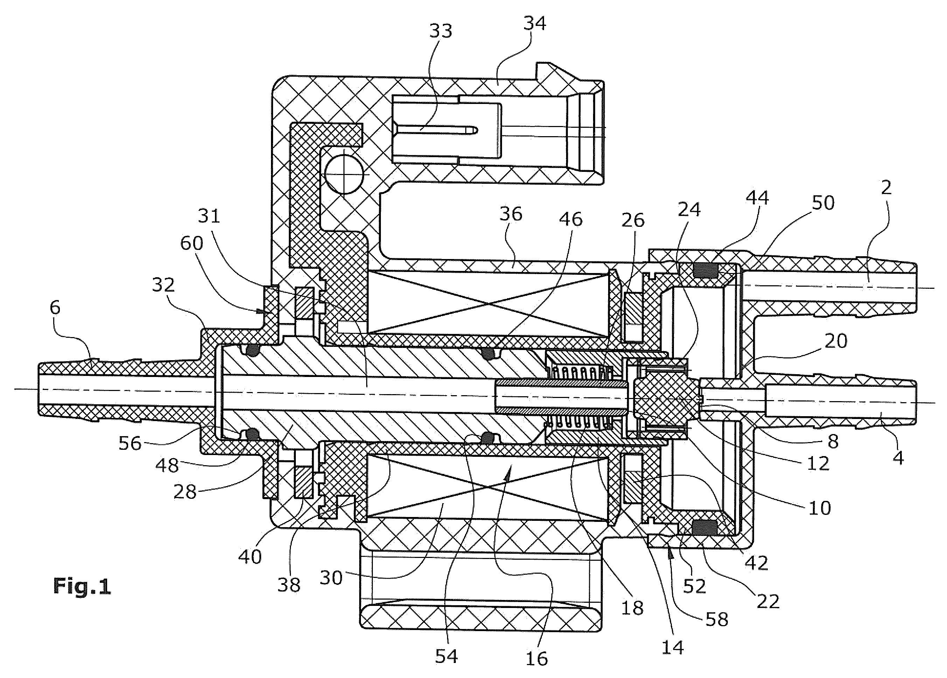

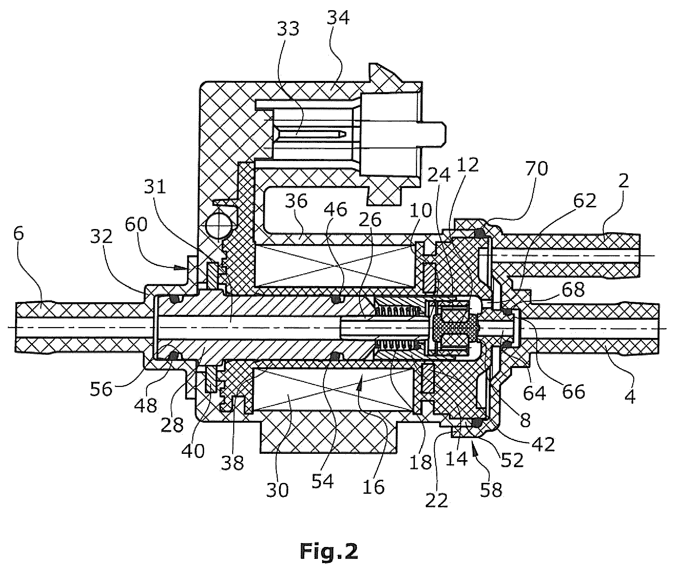

Die Figur 1 zeigt eine Seitenansicht eines erfindungsgemäßen Elektromagnetventils, welches im vorliegenden Ausführungsbeispiel als elektrisches Umschaltventil ausgeführt ist, in geschnittener Darstellung. Die Figur 2 zeigt eine Seitenansicht eines zweiten erfindungsgemäßen Elektromagnetventils, welches ebenfalls als elektrisches Umschaltventil ausgeführt ist, in geschnittener Darstellung.

Das in der Figur 1 dargestellte erfindungsgemäße Elektromagnetventil ist ein elektrisches Umschaltventil, welches einen Fluideinlass 2 und zwei Fluidauslässe 4, 6 aufweist, die wahlweise geschlossen oder geöffnet werden können. Hierzu weist das Umschaltventil zwei Ventilsitze 8, 10 auf, die durch die entgegengesetzten axialen Enden eines Ventilschließgliedes 12 verschlossen werden können.

Das Ventilschließglied 12 ist an einem Anker 14 eines elektromagnetischen Kreises 16 befestigt und wird über eine Feder 18 in Richtung des ersten Ventilsitzes 8 gedrückt, der an einem Vorsprung 20 eines ersten Anschlussgehäuses 22 ausgebildet ist, in dem der Einlass 2 und der erste Auslass 4 ausgebildet sind. Entsprechend ist eine Verbindung zum ersten Fluidauslass 4 bei nicht magnetisiertem elektromagnetischen Kreis 16 unterbrochen. In dieser Stellung kann das Arbeitsfluid vom Einlass 2 über Bohrungen 24 im Ventilschließglied 12 und ein Rohr 26, dessen Ende den zweiten Ventilsitz 10 bildet und durch den Anker 14 ragt, sowie einen Kern 28 des elektromagnetischen Kreises 16, in dessen Durchgangsbohrung 31 das Rohr 26 befestigt ist, zum zweiten Auslass 6, der in einem zweiten Anschlussgehäuse 32 ausgebildet ist, strömen.

Um das Ventilschließglied 12 aus dieser Position entgegen der Federkraft in Richtung des zweiten Ventilsitzes 10 zu bewegen wird eine Spule 30 bestromt, die über Kontaktfahnen 33 mit einer Spannungsquelle verbunden ist. Diese Kontaktfahnen 33 ragen aus einem finschlussstecker 34, der nach dem Einbau des Elektromagnetventils im Fahrzeug mit einem Steckergegenstück über eine Verbindungsleitung mit einer Steuereinheit verbunden wird.

Der Anschlussstecker 34 ist einstückig mit einem Außengehäuse 36 des Elektromagnetventils verbunden, welches als Kunststoffspritzgussteil ausgeführt ist und auch den elektromagnetischen Kreis 16 umgibt. Dieser besteht neben der Spule 30, die auf einem ebenfalls aus Kunststoff hergestellten Spulenträger 38 angeordnet ist, aus dem Kern 28, dem Anker 14 sowie einem Joch 40 und einem Rückschlussblech 42. Entsprechend wirkt bei Bestromung der Spule 30 eine magnetische Anziehungskraft auf den Anker 14 in Richtung des Kerns 28, die dazu führt, dass das Ventilschließglied 12 durch die Bewegung des Ankers 14 entgegen der Federkraft auf den zweiten Ventilsitz 10 gedrückt wird, wodurch die Verbindung des Einlasses 2 zum zweiten Auslass 6 unterbrochen und zum ersten Auslass 4 freigegeben wird.

Je nach Verwendung des Elektromagnetventils ist dringend das Eindringen von Flüssigkeit in Richtung der Spule 30 zu verhindern. Hier ist einerseits ein Eindringen aus den mit dem zu regelnden Fluid durchströmten Beriechen in Richtung zur Spule 30 und andererseits ein Eindringen von beispielsweise Spritzwasser von außen zu vermeiden.

Erfindungsgemäß weist das Elektromagnetventil hierzu verschiedene Mittel zur Abdichtung auf. Zunächst wird ein Eindringen der zu regelnden Flüssigkeit durch drei Dichtringe 44, 46, 48 unterbunden. Der erste dieser Dichtringe 44 befindet sich In einer Nut 50 eines zylinderförmigen Verlängerungsabschnitts 52 des Spulenträgers 38, welche sich in das erste Anschlussgehäuse 22 erstreckt und deren Außendurchmesser im Wesentlichen dem Innendurchmesser des Anschlussgehäuses 22 entspricht. So wird verhindert, dass ein Fluid entlang des Spulenträgers 38 zur Spule 30 strömt.

Der zweite Dichtring 46 ist in einer Nut 54 im Kern 28 angeordnet, welche in Höhe der Spule 30 zum Spulenträger 38 hin abdichtet. Somit kann kein Fluid aus dem Raum zwischen dem Kern 28 und dem Anker 14 entlang des Kerns 28 zur Spule 30 strömen. Der dritte Dichtring 48 ist ebenfalls in einer Umfangsnut 56 des Kerns 28 angeordnet und dichtet gegenüber dem zweiten Anschlussgehäuse 32 ab.

Als weitere Dichtmittel, die insbesondere ein Eindringen von Wasser von außen nach innen verhindern, sind zwei Laserschweißnähte 58, 60 vorgesehen. Die erste Laserschweißnaht 58 befindet sich am zur Spule 30 weisenden Ende des ersten Anschlussgehäuses 22 und verbindet das Außengehäuse 36, welches in diesem Bereich den zylinderförmigen Verlängerungsabschnitts 52 des Spulenträgers 38 umgibt, wasserdicht mit dem das Außengehäuse 36 umgebenden Anschlussgehäuse 22.

Die zweite Laserschweißnaht 60 verbindet das auf dem Außengehäuse 36 aufliegende Anschlussgehäuse 32 mit diesem, so dass auch an dieser Seite entlang des Kerns 28 ein Eindringen von Wasser verhindert wird.

Das Elektromagnetventil entsprechend der Figur 2 unterscheidet sich von dem zuvor beschriebenen vor allem in der Ausführung des Anschlussgehäuses 22 und des Spulenträgers 38, wobei im Folgenden für funktionsgleiche Bauteile gleiche Bezugszeichen verwendet werden.

Der zylinderförmige Verlängerungsabschnitt 52 des Spulenträgers 38 ist derart ausgeführt, dass dieser den ersten Ventilsitz 8 bildet. Um dennoch eine Verbindung zwischen dem Einlass 2 und den Auslässen 4, 6 herstellen zu können, ist in dem Verlängerungsabschnitt 52 des Spulenträgers 38 eine oder mehrere Öffnungen 62 ausgebildet, über die das Fluid zum Ventilschließglied 12 strömen kann. Bei nicht bestromtem Ventil strömt das Fluid dann vom Einlass 2 über die Öffnung 62 und die Bohrungen 24 zum Rohr 26 und von dort zum Auslass 6.

Bei Bestromung wird der zweite Ventilsitz 10 geschlossen und das Fluid strömt durch die Öffnung 62 entlang des am Spulenträger 38 ausgebildeten Ventilsitzes 8 in eine vom Ventilsitz 8 umgebene Öffnung 64, die eine fluidische Verbindung zum Auslass 4 des Anschlussgehäuses 22 aufweist.

Damit keine Kurzschlussströmung zwischen dem Einlass 2 und dem ersten Auslass 4 erfolgen kann, ragt ein zum Ventilsitz gegenüberliegendes Ende 66 des Spulenträgers 38 in den Auslass 4 des Anschlussgehäuses 22. Als Mittel zur Abdichtung ist in diesem Ausführungsbeispiel zwischen diesem Ende 66 und dem Auslass 4 ein weiterer Dichtring 68 angeordnet.

Als weiterer Unterschied zur Ausführung gemäß der Figur 1 ist lediglich die Lage des Dichtringes 44 zu nennen, der nicht in einer Nut angeordnet ist, sondern zwischen dem axialen Ende des Außengehäuses 36 und einem Absatz 70 am Anschlussgehäuse 22 angeordnet ist und zwischen dem Anschlussgehäuse 22 und dem zylindrischen Abschnitt 52 des Spulenträgers 38 dichtet.

Es wird entsprechend ein Elektromagnetventil geschaffen, welches ein Eindringen von Fluiden sowohl von außen als auch aus dem Innern des Ventils zur Spule zuverlässig verhindert. Es benötigt trotzdem nur einen geringen Bauraum und ist einfach zu montieren.

Es sollte deutlich sein, dass der Schutzbereich nicht auf die beschriebenen Ausführungsbeispiele begrenzt ist. So können selbstverständlich auch andere Elektromagnetventile als die beschriebenen Umschaltventil entsprechend abgedichtet werden. Auch sind konstruktive Änderungen der Formen des Ventils denkbar. Insbesondere können die Dichtungen bei zwei gegeneinander abzudichtenden Bauteilen aus Kunststoff sowohl durch Dichtringe, als auch als Laserschweißnaht ausgeführt werden. So können insbesondere die beiden Mittel zur Abdichtung am ersten Anschlussgehäuse sowohl beide, als Laserschweißnaht als auch beide als Dichtringe ausgeführt werden, ohne den Schutzbereich des Hauptanspruchs zu verlassen.

## Patentansprüche

1. Elektromagnetventil mit
einem elektromagnetischen Kreis (16) bestehend aus einer Spule (30), einem Kern (28), einem Anker (14), einem Joch (40) und einem Rückschlussblech (42),
einem Anschlussstecker (34),
einem Ventilschließglied (12), welches mit dem Anker (14) verbunden ist,
einem Spulenträger (38),
einem Außengehäuse (36) und
einem ersten Anschlussgehäuse (22),
wobei an der Verbindung zwischen dem ersten Anschlussgehäuse (22) und dem Außengehäuse (36) erste Mittel zur Abdichtung (58) angeordnet sind,
wobei an der Verbindung zwischen dem ersten Anschlussgehäuse (22) aus Kunststoff und dem Spulenträger (38) aus Kunststoff zweite 20 Mittel zur Abdichtung (44) angeordnet sind.
**dadurch gekennzeichnet, dass**
der Spulenträger (38) einen zylindrischen Verlängerungsabschnitt (52) aufweist, der in das erste Anschlussgehäuse (22) ragt und die ersten Mittel zur Abdichtung (58) durch eine erste Laserschweißnaht (58) gebildet sind, die an einem zur Spule (30) weisenden Ende des ersten Anschlussgehäuses (22) ausgebildet ist, über welche das Außengehäuse (36), welches in diesem Bereich den zylindrischen Verlängerungsabschnitt (52) des Spulenträgers (38) umgibt, wasserdicht mit dem das Außengehäuse (36) umgebenden Anschlussgehäuse (22) verbunden ist.

2. Elektromagnetventil nach Anspruch 1,
**dadurch gekennzeichnet, dass**
das Elektromagnetventil an seiner zum Anschlussgehäuse (22) gegenüberliegenden Seite ein zweites Anschlussgehäuse (32) mit einem Fluidauslass (6) aufweist, der fluidisch mit einem Fluideinlass (2) am ersten Anschlussgehäuse (22) verbindbar ist.

3. Elektromagnetventil nach Anspruch 2,
**dadurch gekennzeichnet, dass**
an der Verbindung zwischen dem Kern (28) und dem zweiten Anschlussgehäuse (32) dritte Mittel zur Abdichtung (48) angeordnet sind.

4. Elektromagnetventil nach einem der Ansprüche 2 oder 3,
**dadurch gekennzeichnet, dass**
an der Verbindung zwischen dem Außengehäuse (36) und dem zweiten Anschlussgehäuse (32) vierte Mittel zur Abdichtung (60) angeordnet sind.

5. Elektromagnetventil nach einem der vorhergehenden Ansprüche,
**dadurch gekennzeichnet, dass**
am ersten Anschlussgehäuse (22) ein Fluidauslass (4) mit einem ersten Ventilsitz (8) ausgebildet ist.

6. Elektromagnetventil nach einem der Ansprüche 1 bis 4,
**dadurch gekennzeichnet, dass**
ein erster Ventilsitz (8) am Spulenträger (38) ausgebildet ist, in dem eine Öffnung (62) zur Verbindung mit dem Einlass (2) und eine Öffnung (64) zur Verbindung mit dem ersten Auslass (4) des ersten Anschlussgehäuses (22) ausgebildet sind.

7. Elektromagnetventil nach Anspruch 6,
**dadurch gekennzeichnet, dass**
das zum ersten Ventilsitz (8) gegenüberliegende Ende (66) des Spulenträgers (38) in den Auslass (4) des ersten Anschlussgehäuses (22) ragt, wobei zwischen dem Ende (66) des Spulenträgers (38) und dem Auslass (4) des Anschlussgehäuses (22) fünfte Mittel zur Abdichtung (68) angeordnet sind.

8. Elektromagnetventil nach einem der Ansprüche 4 bis 7,
**dadurch gekennzeichnet, dass**
im Kern (28) ein durch den Anker (14) ragendes Rohr (26) befestigt ist, welches einen zweiten Ventilsitz (10) für das Ventilschließglied (12) bildet,

9. Elektromagnetventil nach einem der vorhergehenden Ansprüche, **dadurch gekennzeichnet, dass**
die vierten Mittel zur Abdichtung durch eine Laserschweißnaht (60) gebildet sind.

10. Elektromagnetventil nach einem der vorhergehenden Ansprüche, **dadurch gekennzeichnet, dass**
die zweiten und dritten Mittel zur Abdichtung durch einen jeweiligen Dichtring (44, 48) gebildet sind.

11. Elektromagnetventil nach einem der vorhergehenden Ansprüche, **dadurch gekennzeichnet, dass**
an der Verbindung zwischen dem Kern (28) und dem Spulenträger (38) ein Dichtring (46) angeordnet ist.

12. Elektromagnetventil nach einem der vorhergehenden Ansprüche, **dadurch gekennzeichnet, dass**
an den Verbindungen zum Außengehäuse (36) die Laserschweißnähte (58, 60) ausgebildet sind.

13. Elektromagnetventil nach einem der vorhergehenden Ansprüche, **dadurch gekennzeichnet, dass**
die Spule (30) und die Kontaktfahnen (33) des Steckers (34) wasserdicht umspritzt sind.

## Claims

1. Electromagnetic valve comprising
an electromagnetic circuit (16) formed by a coil (30), a core (28), an armature (14), a yoke (40) and a magnetic return plate (42),
a connector (34),
a valve closure element (12) connected with the armature (14),
a coil carrier (38),
an outer housing (36) and
a first connection housing (22),
wherein first means for sealing (58) are arranged at the connection between the first connection housing (22) and the outer housing (36),
wherein second means for sealing (44) are arranged at the connection between the first connection housing (22) of plastic material and the coil carrier (38) of plastic material,
**characterized in that**
the coil carrier (38) has a cylindrical extension portion (52) protruding into the first connection housing (22), and the first means for sealing (58) are formed by a first laser welding seam (58) formed at an end of the first connection housing (22) directed towards the coil (30), by which means the outer housing (36), which in this region surrounds the cylindrical extension portion (52) of the coil carrier (38), is connected in a water-tight manner with the connection housing (22) surrounding the outer housing (36).

2. Electromagnetic valve of claim 1, **characterized in that**, at the side (22) opposite the connection housing, the electromagnetic valve has a second connection housing (32) with a fluid outlet (6) adapted to be fluidically connected with a fluid inlet (2) at the first connection housing (22).

3. Electromagnetic valve of claim 2, **characterized in that** third means for sealing (48) are arranged at the connection between the core (28) and the second connection housing (32).

4. Electromagnetic valve of one of claims 2 or 3, **characterized in that** fourth means for sealing (60) are arranged at the connection between the outer housing (36) and the second connection housing (32).

5. Electromagnetic valve of one of the preceding claims, **characterized in that** a fluid outlet (4) with a first valve seat (8) is formed on the first connection housing (22).

6. Electromagnetic valve of one of claims 1 to 4, **characterized in that** a first valve seat (8) is formed on the coil carrier (38), which valve seat is formed with an opening (62) for connection with the inlet (2) and an opening (64) for connection with the first outlet (4) of the first connection housing (22).

7. Electromagnetic valve of claim 6, **characterized in that** the end (66) of the coil carrier (38) opposite the first valve seat (8) protrudes into the outlet (4) of the first connection housing (22), wherein fifth means for sealing (68) are arranged between the end (66) of the coil carrier (38) and the outlet (4) of the connection housing (22).

8. Electromagnetic valve of one of claims 4 to 7, **characterized in that** a tube (26) protruding through the armature (14) is fastened in the core (28), which tube forms a second valve seat (10) for the valve closure element (12).

9. Electromagnetic valve of one of the preceding claims, **characterized in that** the fourth means for sealing are formed by a laser welding seam (80).

10. Electromagnetic valve of one of the preceding claims, **characterized in that** the second and third means for sealing are formed by a respective sealing ring (44, 48).

11. Electromagnetic valve of one of the preceding claims, **characterized in that** a sealing ring (46) is arranged at the connection between the core (28) and the coil carrier (38).

12. Electromagnetic valve of one of the preceding claims, **characterized in that** the laser welding seams (58, 60) are formed at the connections to the outer housing (36).

13. Electromagnetic valve of one of the preceding claims, **characterized in that** the coil (30) and the contact tabs (33) of the connector (34) are overmoulded in a water-tight manner.

## Revendications

1. Soupape électromagnétique avec
un circuit électromagnétique (16) formé par une bobine (30), un noyau (28), une armature (14), un étrier (40) et une tôle de retour de fluxe (42),
un connecteur (34),
un élément de fermeture de soupape (12) relié à l'armature (14),
une porte-bobine (38),
un carter extérieur (36) et
un premier carter de connexion (22),
des premiers moyens d'étanchéité (58) étant disposés à la jonction entre le premier carter de connexion (22) et le carter extérieur (36),
des deuxièmes moyens d'étanchéité (44) étant disposés à la jonction entre le premier carter de connexion (22) en matière plastique et la porte-bobine (38),
**caractérisée en ce que**
la porte-bobine (38) comprend une section d'extension (52) cylindrique saillant dans le premier carter de connexion (22), et que les premiers moyens d'étanchéité (58) sont formés par une première soudure laser (58) formée à l'extrémité dudit premier carter de connexion (22) dirigée vers la bobine (30), soudure par laquelle le carter extérieur (36) qui, dans cette partie, entoure la section d'extension (52) cylindrique de la porte-bobine (38), est relié de manière étanche à l'eau au premier carter de connexion (22) entourant le carter extérieur (36).

2. Soupape électromagnétique selon la revendication 1, **caractérisée en ce qu'**à son côté opposé au carter de connexion (22), la soupape électromagnétique est munie d'un deuxième carter de connexion (32) ayant une sortie de fluide (6) pouvant être reliée fluidiquement à une entrée de fluide (2) sur le premier carter de connexion (22).

3. Soupape électromagnétique selon la revendication 2, **caractérisée en ce que** troisièmes moyens d'étanchéité (48) sont prévus à la jonction entre le noyau (28) et le deuxième carter de connexion (32).

4. Soupape électromagnétique selon l'une des revendications 2 ou 3, **caractérisée en ce que** quatrièmes moyens d'étanchéité (60) sont prévus à la jonction entre le carter extérieur (36) et le deuxième carter de connexion (32).

5. Soupape électromagnétique selon l'une quelconque des revendications précédentes, **caractérisée en ce qu'**une sortie de fluide (4) avec un premier siège de soupape (8) est formée sur le premier carter de connexion (22).

6. Soupape électromagnétique selon l'une des revendications 1 à 4, **caractérisée en ce qu'**un premier siège de soupape (8) est formé sur la porte-bobine (38), dans lequel sont formées une orifice (52) pour le raccordement avec l'entrée (2) et une orifice (64) pour le raccordement avec la première sortie (4) du premier carter de connexion (22).

7. Soupape électromagnétique selon la revendication 6, **caractérisée en ce que** l'extrémité (66) de la porte bobine (38), opposée au premier siège de soupape (8) saille dans la sortie (4) du premier carter de connexion (22), des cinquièmes moyens d'étanchéité (68) étant disposées entre ladite extrémité (66) de la porte bobine (38) et la sortie (4) du premier carter de connexion (22).

8. Soupape électromagnétique selon l'une des revendications 4 à 7, **caractérisée en ce qu'**un tuyau (26) s'étendant à travers l'armature (14) est monté dans le noyau (28), le tuyau formant un deuxième siège de soupape (10) pour l'élément de fermeture de soupape (12).

9. Soupape électromagnétique selon l'une quelconque des revendications précédentes, **caractérisée en ce que** les quatrièmes moyens d'étanchéité sont formés par une soudure laser (60).

10. Soupape électromagnétique selon l'une quelconque des revendications précédentes, **caractérisée en ce que** les deuxièmes et les troisièmes moyens d'étanchéité sont formés par une bague d'étanchéité (44, 48) respective.

11. Soupape électromagnétique selon l'une quelconque des revendications précédentes, **caractérisée en ce qu'**une bague d'étanchéité (46) est disposée à la jonction entre le noyau (28) et la porte-bobine (38).

12. Soupape électromagnétique selon l'une quelconque des revendications précédentes, **caractérisée en ce que** les soudures laser (58, 60) sont formées aux jonctions avec le carter extérieur (36).

13. Soupape électromagnétique selon l'une quelconque des revendications précédentes, **caractérisée en ce que** la bobine (30) et les lames de contact (33) du connecteur (34) sont surmoulées de manière à être étanche à l'eau.
